# FASCICULE DE BREVET EUROPEEN

(11) **EP 2 166 317 B1**
(45) Date de publication et mention de la délivrance du brevet: **06.05.2020**
(21) Numéro de dépôt: 09170360.3
(22) Date de dépôt: 15.09.2009
(51) Int. Cl.: G01F 23/26, F04B 49/02, G05D 9/12, F28B 9/08, F24F 13/22, F04B 49/06, F04D 15/02, F04B 49/10, F25D 21/14

(54) **DISPOSITIF DE PILOTAGE D'UNE POMPE DE RELEVAGE DE CONDENSATS**
STEUEREINRICHTUNG EINER PUMPE ZUM HOCHPUMPEN VON KONDENSAT
MEANS FOR CONTROLLING THE OPERATION OF A CONDENSATE-LIFTING PUMP

(30) Priorité: 16.09.2008 FR 0856224
(43) Date de publication de la demande: 24.03.2010
(73) Titulaire: Sauermann Industrie, 77173 Chevry Cossigny (FR)
(72) Inventeur: Chauvin, Antoine M., 94410, Saint-Maurice (FR); Leze, Fabrice, 94220 Charenton (FR); Baillon, Michel, 77550 Reau (FR)
(74) Mandataire: Vidon Brevets & Stratégie

(56) Documents cités:
- FR-A1- 2 691 537
- GB-A- 2 170 331
- JP-A- 7 103 805
- JP-A- 2007 205 812
- JP-A- 2007 240 472
- US-A- 3 665 209
- US-B1- 6 761 067

## Description

### 1. domaine de l'invention

Le domaine de l'invention est celui du pilotage de pompes de relevage de liquides, ou condensats, notamment dans des systèmes de climatisation, des systèmes de réfrigération, des systèmes de ventilation ou des systèmes de chauffage.

Plus précisément, l'invention concerne la détection de niveaux de condensats, par exemple dans un réservoir, de façon à piloter l'activation d'une pompe dans de tels systèmes.

### 2. art antérieur

### 2.1 exemple d'installation

Dans ces différents systèmes, ou installations, les condensats, qui résultent de la condensation de la vapeur d'eau présente dans l'air ambiant que l'on refroidit, sont généralement récupérés dans un bac, ou plus généralement dans un réceptacle de récupération, qui peut être dans certains cas un simple panneau de collecte. Il est donc nécessaire d'évacuer les condensats récupérés, d'une part pour éviter le débordement du réceptacle de récupération, et d'autre part pour limiter les risques de contamination bactérienne liés à la stagnation des condensats dans ce réceptacle. Ceci peut se faire par gravité, par exemple à l'aide d'un tuyau rigide ou semi-rigide relié à un système d'évacuation des eaux usées, ou par pompage des condensats recueillis dans un bac d'accumulation.

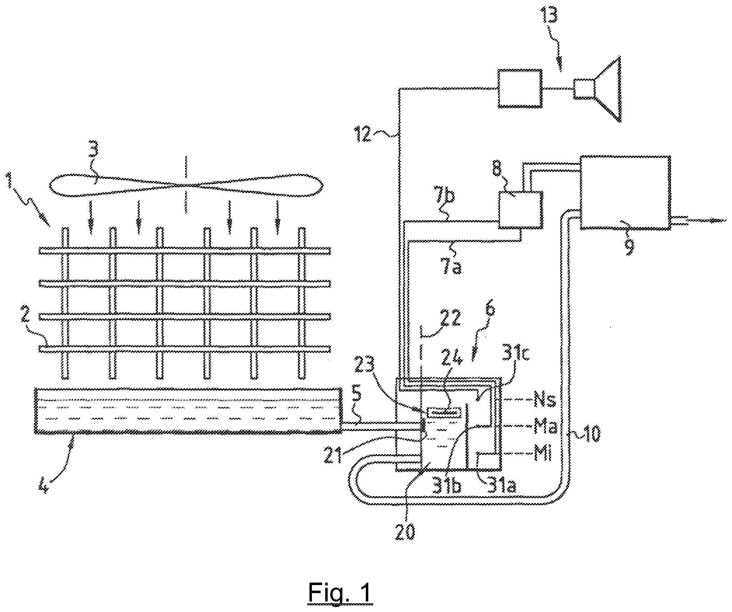

A titre d'exemple, une installation de climatisation de structure connue est représentée schématiquement figure 1.

L'installation 1 comprend un échangeur 2 à l'intérieur duquel circule un fluide réfrigérant, un ventilateur 3 destiné à mettre l'air ambiant en mouvement pour l'amener au contact de l'échangeur 2 afin d'améliorer les échanges thermiques, et un bac de récupération des condensats 4 disposé sous l'échangeur. Lorsque l'air ambiant plus ou moins humide est refroidi au contact de l'échangeur 2, la vapeur d'eau contenue dans l'air se condense et des gouttelettes se forment sur les parois extérieures de l'échangeur. Ces gouttelettes tombent ensuite par gravité dans le bac de récupération 4.

Pour évacuer les condensats récupérés dans le bac 4, l'installation comprend une pompe 9, piloté, c'est-à-dire notamment mise en route et arrêtée, à l'aide d'un dispositif de détection de niveaux des condensats 6. La pompe 9 peut être par exemple, selon les applications et les besoins, une pompe à piston, une pompe centrifuge, une pompe péristaltique, une pompe à membrane, ...

### 2.2 détection des niveaux de condensats

On connaît déjà plusieurs techniques de réalisation d'un dispositif de détection de niveaux de condensats. Une première approche est par exemple décrite dans le document de brevet FR-2 716 715.

Ce dispositif de détection 6 comprend un réservoir 20 qui communique, d'une part avec le bac 4 par l'intermédiaire d'un conduit d'évacuation 5, et d'autre part avec la pompe 9, par l'intermédiaire d'un conduit d'aspiration 10. A l'intérieur du réservoir 20 se trouve un flotteur 23 libre de se déplacer verticalement en suivant le niveau des condensats dans le réservoir. Ce flotteur 23 renferme par ailleurs un aimant 24.

Trois interrupteurs à lames souples 31a, 31b et 31c, chacun scellé dans une ampoule et fixé à l'extérieur d'une paroi du réservoir 20, sont placés au voisinage du trajet de l'aimant. Ces interrupteurs de type « reed switch » sont susceptibles de se fermer sous l'effet du champ magnétique de l'aimant 24. Les interrupteurs 31a et 31b sont connectés par l'intermédiaire de deux circuits électriques 7a et 7b à la commande 8 de la pompe hydraulique 9. L'interrupteur 31c est connecté par l'intermédiaire d'un circuit électrique 12 à la commande d'un système d'alerte 13.

Ces interrupteurs 31a, 31b, 31c se situent respectivement à trois hauteurs différentes qui correspondent chacune sensiblement à trois niveaux de condensats à l'intérieur du réservoir 20 :
- un niveau minimum Mi ;
- un niveau maximum autorisé Ma, supérieur au niveau Mi ; et
- un niveau de sécurité Ns, supérieur au niveau Ma.

En mode de fonctionnement normal de l'installation 1, la hauteur des condensats à l'intérieur du réservoir 20 est comprise entre les niveaux Ma et Mi. Lorsque la hauteur des condensats augmente jusqu'au niveau Ma, l'aimant 24 monte à la hauteur de l'interrupteur 31b qui se ferme. Le dispositif 8 de commande détecte alors la fermeture du circuit électrique 7b et met en fonctionnement la pompe 9 de manière à aspirer les condensats par le conduit d'aspiration 10. La pompe 9 refoule ensuite généralement ces condensats vers une tuyauterie d'eaux usées (non représentée).

Lors du pompage, la hauteur des condensats dans le réservoir 20 redescend jusqu'au niveau Mi, de sorte que l'aimant arrive à la hauteur de l'interrupteur 31a qui se ferme. Le circuit électrique 7a est alors fermé et le dispositif 8 de commande arrête le fonctionnement de la pompe 9.

Dans ce type d'installation, il peut arriver que la pompe 9 soit bouchée ou hors d'usage, que l'interrupteur 31b situé au niveau Ma soit hors d'usage, ou que la condensation de la vapeur d'eau soit anormalement élevée. Dans ce genre de situation, les condensats ne sont plus pompés, ou pas assez rapidement, ce qui risque notamment d'entraîner un débordement du bac 4.

Dans ce cas, la hauteur des condensats à l'intérieur du réservoir 20 augmente jusqu'au niveau Ns de sorte que l'interrupteur 31c se ferme ou s'ouvre, selon le type de branchement. La fermeture ou l'ouverture du circuit électrique 12 déclenche la mise en marche du système d'alerte 13 (signal sonore et/ou visuel, et/ou émission d'un signal d'alerte par exemple), qui prévient l'utilisateur ou un agent de maintenance du dysfonctionnement et donc du risque de débordement du réservoir du dispositif 6 ou du bac de récupération de liquide 4, et/ou qui coupe l'arrivée d'eau froide dans l'échangeur 2, et/ou qui met en arrêt l'installation de climatisation 1.

Ce type de dispositif de détection de niveaux des condensats connu présente toutefois des inconvénients liés aux impuretés (poussières, fibres...) présentes initialement dans l'environnement de l'installation 1 et qui se retrouvent dans les condensats récupérés dans le bac 4. Pour empêcher ces impuretés d'entrer dans le réservoir 20, il est prévu un filtre 21 entre le bac 4 et le réservoir 20. Comme ce filtre 21 s'encrasse, il est nécessaire de le nettoyer régulièrement pour éviter qu'il se bouche, ce qui provoquerait le débordement du bac 4.

Par ailleurs, on constate que certaines impuretés de petites tailles ne sont pas filtrées par le filtre 21, et viennent s'accrocher à la surface du flotteur 23 qui s'encrasse inévitablement. Or, cet encrassement perturbe le déplacement du flotteur 23 à l'intérieur du réservoir 20, et finit par provoquer son immobilisation dans la partie basse du réservoir 20.

La présence de micro-organismes, tels que des bactéries ou des champignons peut entraîner également, dans certaines conditions, la création de biofilms dans le réservoir 20. De la même façon, ces biofilms peuvent perturber le déplacement du flotteur 23.

Le flotteur 23 ne peut alors plus jouer son rôle et, lors de la montée du liquide, la mise en fonctionnement de la pompe 9 et/ou l'activation de l'alarme 13 ne sont plus assurées, de sorte que le réservoir 20 ou le bac de récupération 4 finissent par déborder.

Une autre technique de détection de niveaux est décrite dans le document de brevet EP-1 522 829. Selon cette approche, on met en œuvre des capteurs optiques pour détecter les niveaux de condensats Mi et Ma. Le flotteur est conservé uniquement pour la détection du niveau de sécurité Ns, et n'est donc plus soumis à l'encrassement, puisqu'il ne se trouve pas en contact avec le condensat tant que la pompe fonctionne normalement.

Un inconvénient de cette technique est que l'encrassement et les biofilms peuvent recouvrir le tube contenant les capteurs, et/ou perturber le trajet de la lumière, empêchant ou faussant les détections de niveaux.

Un autre inconvénient est que, de même que la technique précédente, elle nécessite toujours la présence de moyens mécaniques en mouvement, au moins pour le niveau de sécurité. Ces moyens mécaniques supposent un assemblage précis et coûteux, et peuvent toujours se bloquer ou se gripper.

Par ailleurs, la présence d'un flotteur suppose que le réservoir soit placé dans une position horizontale précise, pour que le fonctionnement soit efficace et la détection précise.

Il a également été proposé, dans certains systèmes, de ne détecter qu'un seul niveau, correspondant au niveau maximal Ma. Lorsque le niveau de condensats atteint le niveau maximal Ma, la pompe est activée pendant une durée fixe (par exemple 30 s), contrôlée à l'aide d'une temporisation.

Cette approche est plus simple, mais moins performante, puisque la durée de pompage est fixe, et peut être trop longue ou trop courte, selon les situations.

On connaît également, dans d'autres domaines, des capteurs de niveaux mettant en œuvre des capacités. Ainsi, le document US 6 761 067 propose, pour des pompes broyeuses, un ensemble de capacités formées chacune par deux électrodes horizontales, successivement recouvertes par le liquide. Une approche similaire est présentée dans le document JP 2007 205 812. Les documents JP 2007 240 472 et EP 2 691 537 A1 illustrent une autre approche à base d'électrodes distribuées.

Aucune de ces approches ne permet de lutter efficacement contre les biofilms.

### 3. objectifs de l'invention

L'invention a notamment pour objectif de pallier ces inconvénients de l'art antérieur.

Plus précisément, un objectif de l'invention est de fournir une technique de pilotage d'une pompe de relevage de condensats qui soit simple et efficace, et peu coûteuse à mettre en œuvre.

Au moins selon un mode de réalisation, un objectif de l'invention est de fournir une telle technique, qui permette de s'affranchir de la présence d'éléments mécaniques mobiles.

Un autre objectif de l'invention, selon au moins un mode de réalisation, est de fournir une telle technique, qui soit insensible, ou peu sensible, par rapport à l'art antérieur, à l'encrassement et aux biofilms.

Encore un objectif de l'invention, selon au moins un mode de réalisation, est de fournir une telle technique, qui soit moins sensible que les techniques connues à la position du réservoir par rapport à l'horizontale.

L'invention a encore pour objectif, selon au moins un mode de réalisation, est de fournir une telle technique, qui soit plus précise et plus efficace que les systèmes mettant en œuvre un seul capteur et une temporisation.

### 4. résumé de l'invention

Ces objectifs, ainsi que d'autres qui apparaîtront par la suite, sont atteints à l'aide d'un dispositif de pilotage d'une pompe de relevage de condensats selon la revendication 1.

Ainsi, l'invention permet de mesurer des niveaux de condensats sans moyens mécaniques mobiles, à partir d'éléments simples et relativement peu coûteux, et pouvant présenter un encombrement réduit. Le dispositif est en outre moins sensible à une variation du positionnement angulaire du réservoir par rapport à l'horizontale.

Les premier et deuxième niveaux peuvent correspondre par exemple respectivement à un niveau minimal, à partir duquel la pompe doit être arrêtée, et à un niveau maximal, à partir duquel la pompe doit être mise en marche.

Lesdites électrodes peuvent notamment s'étendre perpendiculairement à la surface libre desdits condensats, sur au moins une portion de leur longueur.

Elles se prolongent au-delà dudit niveau d'alarme, de façon qu'une portion supérieure de chacune desdites électrodes ne soit jamais en contact avec lesdits condensats.

Il s'agit donc d'électrodes « ilotées ». De telles électrodes permettent notamment de lutter plus efficacement contre d'éventuels biofilms, qui pourraient créer des liaisons électriques intempestives entre certaines électrodes.

Avantageusement, le dispositif de l'invention comprend en outre une électrode de référence, de façon que lesdits moyens de mesure délivrent également une capacité de référence, mesurée entre ladite électrode de masse et ladite électrode de référence.

Cette capacité de référence peut permettre de déterminer des informations fiables, et indépendantes des caractéristiques des condensats. On peut ainsi s'affranchir de tout étalonnage.

Notamment, lesdits moyens de traitement peuvent alors déterminer des capacités réduites, pour chacune desdites électrodes de détection, correspondant au rapport entre la capacité mesurée entre ladite électrode de masse et cette électrode de détection d'une part, et ladite capacité de référence d'autre part.

Le dispositif de l'invention comprend encore une électrode de détection d'un niveau d'alarme, de longueur inférieure à ladite électrode de détection de deuxième niveau, lesdits moyens de mesure délivrant également une troisième capacité, mesurée entre ladite électrode de masse et ladite électrode de détection d'un niveau d'alarme.

Selon l'invention, lesdites électrodes sont co-planaires. Elles sont réalisées dans le prolongement d'un support de circuit imprimé portant au moins une partie desdits moyens de traitement.

Selon un mode de réalisation particulier, au moins une portion desdites armatures est recouverte et/ou logée dans un matériau à fort constante diélectrique, notamment de valeur supérieure à 4, et par exemple de la céramique.

Selon une mise en œuvre particulière, le dispositif de l'invention comprend des moyens d'isolation galvanique, par exemple sous la forme d'un transformateur.

On peut cependant s'en affranchir, notamment si le matériau diélectrique est suffisamment épais.

Dans une mise en œuvre particulière, au moins une partie desdites électrodes est réalisée dans une résine conductrice.

Celle-ci peut notamment être coulée dans un support en céramique.

L'invention concerne les systèmes de climatisation, de réfrigération et/ou de chauffage comprenant au moins une pompe de relevage de condensats contenus dans un réservoir, et un dispositif de pilotage, tel que décrit ci-dessus.

### 5. liste des figures

D'autres caractéristiques et avantages de l'invention apparaîtront plus clairement à la lecture de la description suivante d'un mode de réalisation préférentiel de l'invention, donné à titre de simple exemple illustratif et non limitatif, et des dessins annexés parmi lesquels :
- la figure 1, déjà commentée en préambule, représente schématiquement un exemple d'installation de climatisation, connue en soi ;
- la figure 2 illustre schématiquement un premier mode de réalisation d'un dispositif de pilotage selon l'invention, pouvant être mis en œuvre notamment dans l'installation de la figure 1, à la place du capteur à flotteur ;
- la figure 3 présente, schématiquement, le fonctionnement des moyens de traitement du dispositif de la figure 2, selon un mode de réalisation particulier ;
- la figure 4 présente schématiquement un exemple de capteur selon l'invention, à électrodes ilotées ;
- la figure 5 présente un autre exemple de capteur selon l'invention, à électrodes partiellement ilotées.

### 6. description d'un mode de réalisation particulier

### 6.1 introduction

L'invention propose donc une nouvelle approche du pilotage d'une pompe de relevage de condensats, dans des systèmes de type dit HVACR (pour « Heating, Ventilation, Air-Conditionning, Réfrigération » en anglais, soit « chauffage, ventilation, air conditionné et/ou réfrigération »). Dans certains de ces systèmes, dont un exemple est illustré en figure 1, déjà commentée, on prévoit une pompe de relevage des condensats, appartenant par exemple au groupe comprenant les pompes à piston, centrifuges, péristaltiques, à membrane,...

Cette pompe est associée à un détecteur de niveaux, qui peut être regroupé dans un même ensemble avec la pompe (pompe dite mono-bloc) ou séparé de celle-ci (pompe dite bi-bloc). Selon les applications et les besoins, la pompe et/ou le détecteur peuvent être montés dans, sous ou à côté de l'unité de climatiseur, le cas échéant dans une goulotte prévue à cet effet.

Selon l'invention, le détecteur repose sur un capteur capacitif, configuré de façon à pouvoir mesurer au moins deux niveaux, un premier niveau correspondant par exemple au niveau minimal Mi et un deuxième niveau correspondant par exemple au niveau maximal Ma de la figure 1.

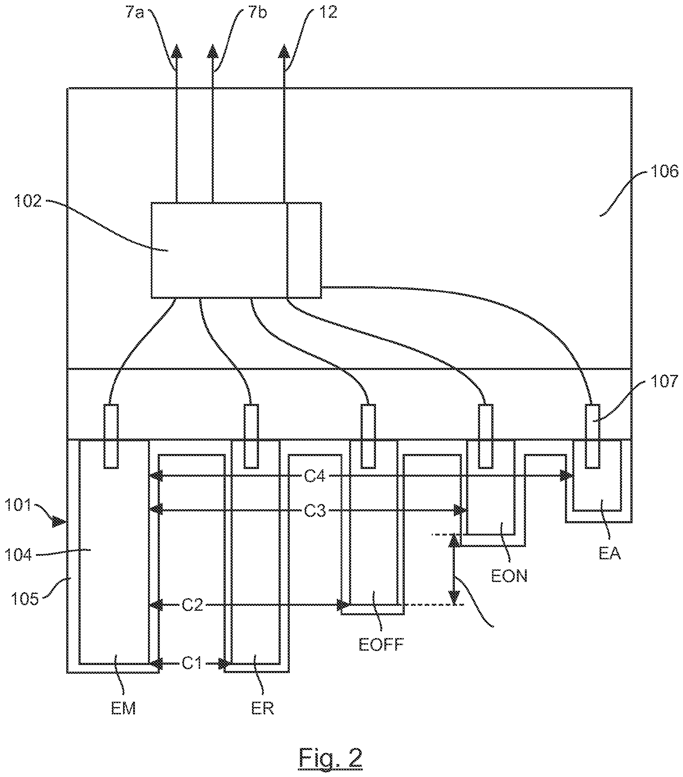

La figure 2 présente schématiquement un dispositif selon l'invention, dans un mode de réalisation avantageux prévoyant cinq électrodes.

Ce dispositif comprend donc d'une part un détecteur capacitif 101, et d'autre part des moyens de traitement 102, délivrant les commandes requises 7a et 7b, à la pompe 9 et le cas échéant la commande 12 aux moyens d'alarme 13 (figure 1), en fonction des mesures délivrées par le détecteur 101.

### 6.2 structure du capteur capacitif

Le détecteur capacitif comprend ici cinq électrodes :
- une électrode de masse EM ;
- une électrode de référence ER, pour créer une capacité C1 avec l'électrode EM ;
- une électrode de premier niveau EOFF, pour créer une capacité C2 avec l'électrode EM ;
- une électrode de deuxième niveau EON, pour créer une capacité C3 avec l'électrode EM ;
- une électrode de niveau d'alarme EAL, pour créer une capacité C4 avec l'électrode EM.

On constate que les longueurs de ces électrodes sont différentes. Elles permettent en effet de détecter différents de niveaux de condensats, dans le réservoir 103 dans lequel elles sont plongées. En effet, la capacité Ci mesurée varie, selon que l'une des électrodes est ou non en contact avec les condensats.

Ainsi, l'électrode EM est dimensionnée de façon à être toujours en contact avec les condensats, et donc pénétrer dans le réservoir, au-delà du niveau minimal. L'électrode de référence ER, dont le rôle est détaillé par la suite, présente la même longueur que l'électrode EM, de façon à permettre de disposer en permanence d'une capacité de référence C1.

L'électrode de premier niveau EOFF a une longueur telle que son extrémité inférieure correspond à un niveau minimal de condensats, dans le mode de réalisation illustré, c'est-à-dire au niveau auquel il convient d'arrêter la pompe.

L'électrode de deuxième niveau EON a une longueur telle que son extrémité inférieure correspond à un niveau maximal de condensats, dans le mode de réalisation illustré, c'est-à-dire au niveau auquel il convient d'activer la pompe.

L'électrode d'alarme EON a une longueur telle que son extrémité inférieure correspond à un niveau d'alarme, dans le mode de réalisation illustré, c'est-à-dire au niveau auquel il convient de générer une alarme.

La pompe est donc en marche sensiblement lorsque le niveau de condensats se trouve entre les électrodes EOFF et EON (flèche 109).

On comprend que, selon l'approche de l'invention, il est possible de supprimer ou d'ajouter des électrodes, en fonction des besoins. Par exemple, l'électrode de référence peut être supprimée, s'il n'est pas mis en œuvre un calcul de capacités réduites tel que décrit ci-après. De même, l'électrode d'alarme peut être supprimée, notamment si l'alarme est gérée par un autre moyen, tel qu'un flotteur comme proposé dans le document EP-1 522 829 déjà mentionné. Inversement, il est possible d'ajouter des électrodes, par exemple pour doubler les mesures, ou pour détecter des niveaux intermédiaires, pouvant être utiles dans certaines applications.

Les différentes électrodes peuvent être réalisées dans une résine conductrice 104, qui peut être injecté dans des logements prévus à cet effet dans une cellule en céramique diélectrique 105. Le terme « électrode » doit donc s'entendre, au sens de l'invention, comme étant un élément conducteur (appelé ici armature) isolé des condensats par un élément d'isolation diélectrique.

La carte électronique, ou le support de circuit imprimé, 106, portant notamment les moyens de traitement 102, présente des inserts conducteurs 107, qui sont introduits dans la résine 104, lors de son injection.

D'autres modes de fabrication sont bien sûr envisageables. Notamment les électrodes peuvent être des plaques recouvertes de cuivre, le cas échéant formées directement sur le circuit imprimé 106. De même, l'élément d'isolation électrique peut être réalisé d'une cellule distincte pour chaque électrode, et/ou d'un matériau diélectrique rapporté sur l'armature, par exemple par surmoulage.

Pour répondre aux exigences d'isolation galvanique, c'est-à-dire l'isolation électrique du circuit avec l'extérieur, on peut prévoir un transformateur électrique sur le circuit imprimé. Ceci est notamment souhaitable notamment si l'épaisseur du diélectrique est faible (par exemple de l'ordre de 0,1 mm).

Il est cependant possible de s'affranchir de la présence d'un tel transformateur, coûteux, lourd et encombrant, en augmentant l'épaisseur du diélectrique 105, par exemple de l'ordre de 1 ou 2 mm. On pourra ainsi disposer d'un élément diélectrique, dit « à paroi épaisse », qui constitue une partie de la paroi du détecteur et qui respecte les exigences légales d'un isolant immergé.

Bien sûr, l'augmentation de l'épaisseur du diélectrique engendre une diminution du flux électrique. Pour limiter cet inconvénient, on peut augmenter la surface des électrodes, et/ou augmenter la permittivité du diélectrique. On pourra notamment utiliser une céramique à forte constante diélectrique (par exemple supérieure à 4 ou 5), ou tout autre matériau adéquat.

Les différentes électrodes sont réalisées sur des supports distincts ne présentant pas entre eux de continuité matérielle immergeable. En d'autres termes, les électrodes sont « ilotées », c'est-à-dire qu'elles se prolongent au-delà dudit niveau d'alarme, de façon qu'une portion supérieure de chacune desdites électrodes ne soit jamais en contact avec lesdits condensats. Ceci permet notamment d'éviter qu'un film humide, ou un biofilm, se dépose entre deux électrodes, pouvant former un conducteur d'électricité. En effet, dans ce cas, la mesure serait identique ou similaire à celle obtenue lors d'une immersion, ce qui conduirait à des déclenchements ou des arrêts intempestifs de la pompe, ou à la génération de fausses alarmes.

### 6.3 traitement des mesures

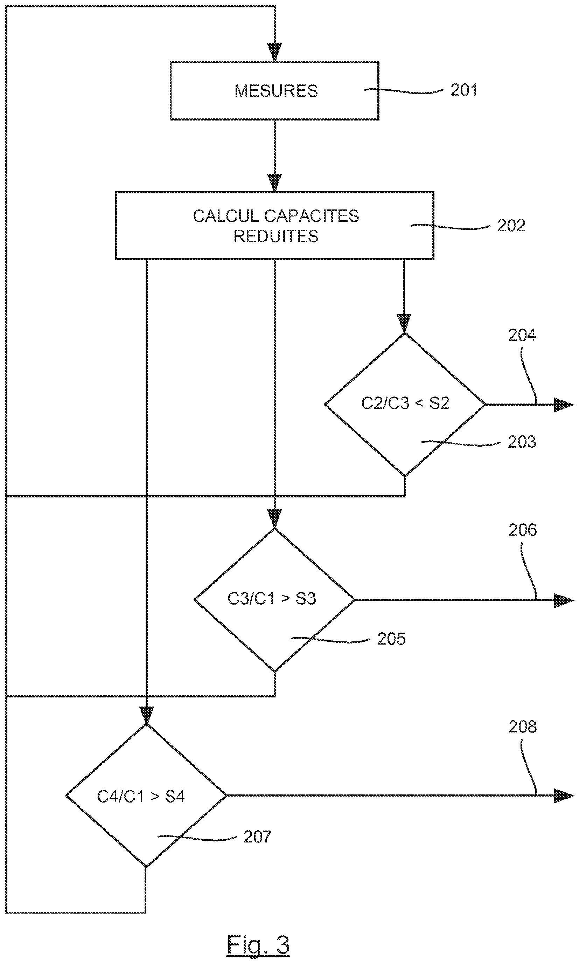

Le traitement effectué par les moyens de traitement 102 sont schématiquement décrit par la figure 3, selon une mise en œuvre particulière.

Les moyens de traitement 102 obtiennent (201) quatre valeurs de capacités C1, C2, C3 et C4, relevées à l'aide des électrodes, comme illustré sur la figure 2.

Il calcule (202) alors trois capacités réduites, c'est-à-dire les rapports entre les capacités C2, C3 et C4 et la capacité de référence C1. Il délivre donc C2/C1, C3/C1 et C4/C1. Il est à noter que cette opération n'est pas obligatoire, mais que les inventeurs ont remarqué qu'elle permet généralement de s'affranchir d'un étalonnage précis en fonction de paramètres environnementaux pouvant influer sur la capacité. Les tests effectués montrent en effet que les mesures de capacités de l'eau sont très variables, selon divers paramètres. En revanche, les capacités réduites sont sensiblement indépendantes de ces aspects.

Lorsque les condensats atteignent l'une des électrodes EOFF, EON ou EAL, la capacité réduite correspondante C2/C1, C3/C1 ou C4/C1 varie fortement, passant d'une valeur proche de 0 à une valeur proche de 1. Une comparaison avec des seuils permet donc de piloter la pompe, et le cas échéant de générer une alarme :
- 203 : si C2/C1 < S2, le niveau minimal est atteint : on émet alors une commande 204 d'arrêt de la pompe ;
- 205 : si C3/C1 > S3, le niveau maximal est atteint : on émet alors une commande 206 de mise en marche de la pompe ;
- 207 : si C4/C1 > S4, le niveau d'alarme est atteint : on émet alors une commande 208 de génération d'alarme.

### 6.4 exemples de capteurs

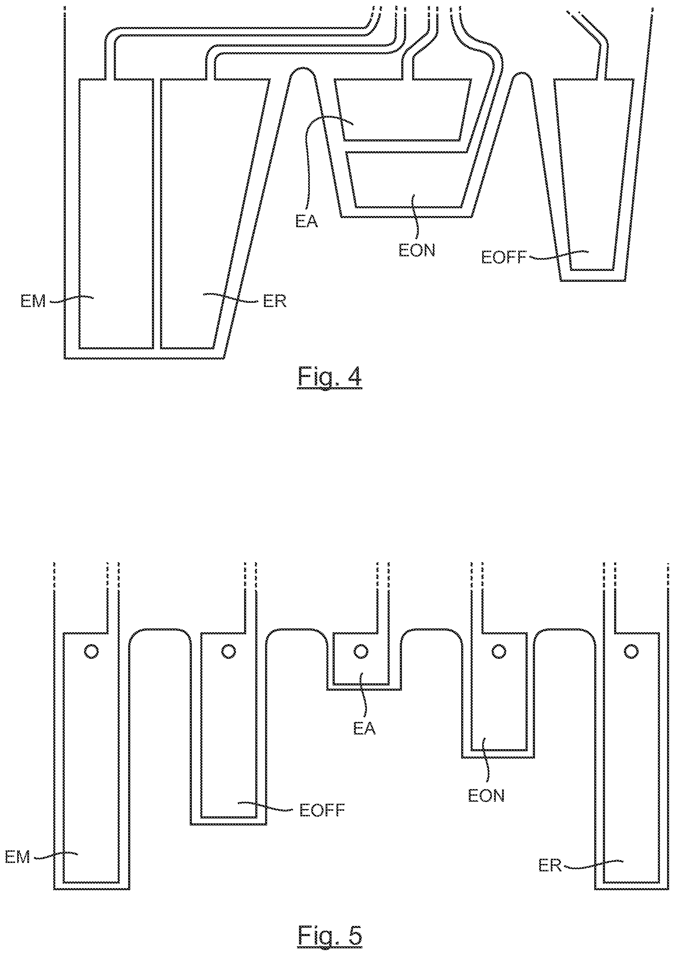

A titre d'exemple, la figure 4 illustre une distribution possible des électrodes, dans un mode de réalisation particulier, dite ilotée. Les électrodes s'étendent verticalement.

Une autre distribution possible, dite partiellement ilotée, est illustrée par la figure 5. Dans ce mode de réalisation, qui vise notamment à augmenter la surface des électrodes dans un espace réduit, les électrodes EM et ER sont voisines l'une de l'autre, et les électrodes EON et EAL sont placées essentiellement horizontalement, l'une au-dessus de l'autre.

D'autres distributions et formes sont bien sûr possibles. Par exemple, au moins certaines des électrodes de la figure 4 pourraient avoir une forme de L, ou de J, avec une portion inférieure s'étendant à l'horizontal.

## Revendications

1. Dispositif de pilotage d'une pompe de relevage (9) de condensats, comprenant des moyens de détection d'au moins deux niveaux de condensats dans un réservoir (20), des moyens de traitement (102) et des moyens d'activation ou d'arrêt de ladite pompe (9) en fonction desdits niveaux, et un support de circuit imprimé (106) portant au moins une partie desdits moyens de traitement (102), lesdits moyens de détection comprenant un détecteur capacitif (101) comprenant au moins trois électrodes (EM, ER, EOFF, EON, EA), comprenant chacune une armature conductrice (104) isolée par au moins un élément d'isolation diélectrique (105), reliées auxdits moyens de traitement (102) :
- une électrode de masse (EM) ;
- une électrode de détection d'un premier niveau (EOFF) ; et
- une électrode de détection d'un deuxième niveau (EON),
lesdits moyens de traitement (102) comprenant des moyens de mesure d'une première capacité (C2) entre ladite électrode de masse (EM) et ladite électrode de détection d'un premier niveau (EOFF) et d'une deuxième capacité (C3) entre ladite électrode de masse (EM) et ladite électrode de détection d'un deuxième niveau (EON),
dispositif **caractérisé en ce que** les longueurs desdites électrodes de détection d'un premier niveau (EOFF) et d'un deuxième niveau (EON) sont définies de façon à entrer en contact avec lesdits condensats, lorsque ces derniers atteignent respectivement ledit premier niveau et ledit second niveau dans ledit réservoir (20),
**en ce qu'**il comprend une électrode de détection d'un niveau d'alarme (EA), de longueur inférieure à ladite électrode de détection de deuxième niveau (EON), lesdits moyens de mesure délivrant également une troisième capacité (C4), mesurée entre ladite électrode de masse (EM) et ladite électrode de détection d'un niveau d'alarme (EA),
et **en ce que** l'électrode de masse (EM), l'électrode de détection d'un premier niveau (EOFF) et l'électrode de détection d'un deuxième niveau (EON) sont réalisées sur des supports distincts ne présentant pas entre eux de continuité matérielle immergeable, lesdits supports distincts sont réalisés dans le prolongement dudit support de circuit imprimé (106) et se prolongent au-delà du niveau d'alarme, de façon qu'une portion supérieure de chacune desdites électrodes ne soit jamais en contact avec lesdits condensats.

2. Dispositif de pilotage selon la revendication 1, **caractérisé en ce qu'**il comprend en outre une électrode de référence (ER), et **en ce que** lesdits moyens de mesure sont agencés pour délivrer également une capacité de référence (C1), mesurée entre ladite électrode de masse (EM) et ladite électrode de référence (ER).

3. Dispositif de pilotage selon la revendication 2, **caractérisé en ce que** lesdits moyens de traitement (102) détermine des capacités réduites, pour chacune desdites électrodes de détection, rapport entre la capacité (C2, C3) mesurée entre ladite électrode de masse (EM) et cette électrode de détection (EOFF, EON) d'une part, et ladite capacité de référence (C1) d'autre part.

4. Dispositif de pilotage selon l'une quelconque des revendications 1 à 3, **caractérisé en ce que** lesdites électrodes (EM, ER, EOFF, EON, EA) s'étendent perpendiculairement à la surface libre desdits condensats, sur au moins une portion de leur longueur.

5. Dispositif de pilotage selon l'une quelconque des revendications 1 à 4, **caractérisé en ce qu'**au moins une portion desdites armatures est recouverte et/ou logée dans un matériau constante diélectrique de valeur supérieure à 4.

6. Dispositif de pilotage selon la revendication 5, **caractérisé en ce que** ledit matériau est de la céramique.

7. Dispositif de pilotage selon l'une quelconque des revendications 1 à 6, **caractérisé en ce qu'**il comprend des moyens d'isolation galvanique.

8. Dispositif de pilotage selon l'une quelconque des revendications 1 à 7, **caractérisé en ce qu'**au moins une partie desdites électrodes (EM, ER, EOFF, EON, EA) est réalisée dans une résine conductrice.

9. Système de climatisation, de réfrigération et/ou de chauffage comprenant au moins une pompe de relevage de condensats (9) contenus dans un réservoir (20), et un dispositif de pilotage de ladite pompe selon l'une quelconque des revendications 1 à 8, comprenant des moyens de détection d'au moins deux niveaux de condensats dans ledit réservoir (20), des moyens de traitement (102) et des moyens d'activation ou d'arrêt de ladite pompe (9) en fonction desdits niveaux, et un support de circuit imprimé (106) portant au moins une partie desdits moyens de traitement (102),
lesdits moyens de détection comprenant un détecteur capacitif (101) comprenant au moins trois électrodes (EM, ER, EOFF, EON, EA), comprenant chacune une armature conductrice (104) isolée par au moins un élément d'isolation diélectrique (105), reliées auxdits moyens de traitement (102) :
- une électrode de masse (EM) ;
- une électrode de détection d'un premier niveau (EOFF) ; et
- une électrode de détection d'un deuxième niveau (EON),
lesdits moyens de traitement (102) comprenant des moyens de mesure d'une première capacité (C2) entre ladite électrode de masse (EM) et ladite électrode de détection d'un premier niveau (EOFF) et d'une deuxième capacité (C3) entre ladite électrode de masse (EM) et ladite électrode de détection d'un deuxième niveau (EON),
système **caractérisé en ce que** les longueurs desdites électrodes de détection d'un premier niveau (EOFF) et d'un deuxième niveau (EON) sont définies de façon à entrer en contact avec lesdits condensats, lorsque ces derniers atteignent respectivement ledit premier niveau et ledit deuxième niveau dans ledit réservoir (20),
**en ce qu'**il comprend une électrode de détection d'un niveau d'alarme (EA), de longueur inférieure à ladite électrode de détection de deuxième niveau (EON), lesdits moyens de mesure délivrant également une troisième capacité (C4), mesurée entre ladite électrode de masse (EM) et ladite électrode de détection d'un niveau d'alarme (EA),
et **en ce que** de masse (EM), l'électrode de détection d'un premier niveau (EOFF) et l'électrode de détection d'un deuxième niveau (EON) sont réalisées sur des supports distincts ne présentant pas entre eux de continuité matérielle immergeable, lesdits supports distincts sont réalisés dans le prolongement dudit support de circuit imprimé et se prolongent au-delà du niveau d'alarme, de façon qu'une portion supérieure de chacune desdites électrodes ne soit jamais en contact avec lesdits condensats.

## Patentansprüche

1. Steuervorrichtung einer Förderpumpe (9) für Kondensate, umfassend Mittel zur Detektion mindestens zweier Kondensatfüllstände in einem Behälter (20), Verarbeitungsmittel (102) und Mittel zum Aktivieren oder Anhalten der Pumpe (9) in Abhängigkeit von den Füllständen und einen Leiterplattenträger (106), der wenigstens einen Teil der Verarbeitungsmittel (102) trägt, die Detektionsmittel umfassend einen kapazitiven Detektor (101) umfassend mindestens drei Elektroden (EM, ER, EOFF, EON, EA), jeweils umfassend eine leitende Armatur (104), die durch mindestens ein dielektrisches Isolationselement (105) isoliert ist, die mit den Verarbeitungsmitteln (102) verbunden sind:
- eine Masseelektrode (EM);
- eine Elektrode zur Detektion eines ersten Füllstands (EOFF); und
- eine Elektrode zur Detektion eines zweiten Füllstands (EON),
die Verarbeitungsmittel (102) umfassend Mittel zur Messung einer ersten Kapazität (C2) zwischen der Masseelektrode (EM) und der Elektrode zur Detektion eines ersten Füllstands (EOFF) und einer zweiten Kapazität (C3) zwischen der Masseelektrode (EM) und der Elektrode zur Detektion eines zweiten Füllstands (EON),
wobei die Vorrichtung **dadurch gekennzeichnet ist, dass** die Längen der Elektroden zur Detektion eines ersten Füllstands (EOFF) und eines zweiten Füllstands (EON) so definiert sind, dass sie mit den Kondensaten in Kontakt treten, wenn diese jeweils den ersten Füllstand beziehungsweise den zweiten Füllstand in dem Behälter (20) erreichen, dadurch, dass sie eine Elektrode zur Detektion eines Alarmfüllstands (EA) mit einer kleineren Länge als die Elektrode zur Detektion des zweiten Füllstands (EON) umfasst, wobei die Messmittel ebenfalls eine dritte Kapazität (C4) liefern, die zwischen der Masseelektrode (EM) und der Elektrode zur Detektion eines Alarmfüllstands (EA) gemessen wird,
und dadurch, dass die Masseelektrode (EM), die Elektrode zur Detektion eines ersten Füllstands (EOFF) und die Elektrode zur Detektion eines zweiten Füllstands (EON) auf gesonderten Trägern ausgebildet sind, die untereinander keine eintauchbare Materialdurchgängigkeit aufweisen, die gesonderten Träger in der Verlängerung des Leiterplattenträgers (106) ausgebildet sind und sich über den Alarmfüllstand hinaus fortsetzen, so dass eine oberer Abschnitt jeder der Elektroden nie mit den Kondensaten in Kontakt steht.

2. Steuervorrichtung nach Anspruch 1, **dadurch gekennzeichnet, dass** sie ferner eine Referenzelektrode (ER) umfasst, und dadurch, dass die Messmittel angeordnet sind, ebenfalls eine Referenzkapazität (C1) zu liefern, die zwischen der Masseelektrode (EM) und der Referenzelektrode (ER) gemessen wird.

3. Steuervorrichtung nach Anspruch 2, **dadurch gekennzeichnet, dass** die Verarbeitungsmittel (102) verringerte Kapazitäten für jede der Detektionselektroden bestimmt, Verhältnis zwischen der Kapazität (C2, C3), die zwischen der Masseelektrode (EM) und dieser Detektionselektrode (EOFF, EON) gemessen wird, einerseits und der Referenzkapazität (C1) andererseits.

4. Steuervorrichtung nach einem der Ansprüche 1 bis 3, **dadurch gekennzeichnet, dass** sich die Elektroden (EM, ER, EOFF, EON, EA) senkrecht zu der freien Fläche der Kondensate auf wenigstens einem Abschnitt ihrer Länge erstrecken.

5. Steuervorrichtung nach einem der Ansprüche 1 bis 4, **dadurch gekennzeichnet, dass** wenigstens ein Abschnitt der Armaturen mit einem Material Dielektrizitätskonstante mit einem Wert höher als 4 bedeckt und/oder darin aufgenommen ist.

6. Steuervorrichtung nach Anspruch 5, **dadurch gekennzeichnet, dass** das Merkmal Keramik ist.

7. Steuervorrichtung nach einem der Ansprüche 1 bis 6, **dadurch gekennzeichnet, dass** sie Mittel zur galvanischen Trennung umfasst.

8. Steuervorrichtung nach einem der Ansprüche 1 bis 7, **dadurch gekennzeichnet, dass** wenigstens ein Teil der Elektroden (EM, ER, EOFF, EON, EA) aus einem leitenden Harz gebildet ist.

9. Klimatisierungs-, Kühl- und/oder Heizsystem, umfassend mindestens eine Förderpumpe für Kondensate (9), die in einem Behälter (20) enthalten sind, und eine Steuervorrichtung der Pumpe nach einem der Ansprüche 1 bis 8,
umfassend Mittel zur Detektion mindestens zweier Kondensatfüllstände in dem Behälter (20), Verarbeitungsmittel (102) und Mittel zum Aktivieren oder Anhalten der Pumpe (9) in Abhängigkeit von den Füllständen und einen Leiterplattenträger (106), der wenigstens einen Teil der Verarbeitungsmittel (102) trägt,
die Detektionsmittel umfassend einen kapazitiven Detektor (101) umfassend mindestens drei Elektroden (EM, ER, EOFF, EON, EA), jeweils umfassend eine leitende Armatur (104), die durch mindestens ein dielektrisches Isolationselement (105) isoliert ist, die mit den Verarbeitungsmitteln (102) verbunden sind:
- eine Masseelektrode (EM);
- eine Elektrode zur Detektion eines ersten Füllstands (EOFF); und
- eine Elektrode zur Detektion eines zweiten Füllstands (EON),
die Verarbeitungsmittel (102) umfassend Mittel zur Messung einer ersten Kapazität (C2) zwischen der Masseelektrode (EM) und der Elektrode zur Detektion eines ersten Füllstands (EOFF) und einer zweiten Kapazität (C3) zwischen der Masseelektrode (EM) und der Elektrode zur Detektion eines zweiten Füllstands (EON),
System, **dadurch gekennzeichnet, dass** die Längen der Elektroden zur Detektion eines ersten Füllstands (EOFF) und eines zweiten Füllstands (EON) so definiert sind, dass sie mit den Kondensaten in Kontakt treten, wenn diese den ersten Füllstand beziehungsweise den zweiten Füllstand in dem Behälter (20) erreichen,
dadurch, dass sie eine Elektrode zur Detektion eines Alarmfüllstands (EA) mit einer kleineren Länge als die Elektrode zur Detektion des zweiten Füllstands (EON) umfasst, wobei die Messmittel ebenfalls eine dritte Kapazität (C4) liefern, die zwischen der Masseelektrode (EM) und der Elektrode zur Detektion eines Alarmfüllstands (EA) gemessen wird,
und dadurch, dass Massen (EM), die Elektrode zur Detektion eines ersten Füllstands (EOFF) und die Elektrode zur Detektion eines zweiten Füllstands (EON) auf gesonderten Trägern ausgebildet sind, die untereinander keine eintauchbare Materialdurchgängigkeit aufweisen, die gesonderten Träger in der Verlängerung des Leiterplattenträgers ausgebildet sind und sich über den Alarmfüllstand hinaus fortsetzen, so dass ein oberer Abschnitt jeder der Elektroden nie mit den Kondensaten in Kontakt steht.

## Claims

1. A device for controlling a condensate lift pump (9), comprising a means for detecting at least two condensate levels in a container (20), processing means (102) and a means for activating and for stopping said pump (9) according to said levels, and a printed circuit support (106) carrying at least a portion of said processing means (102), in which said detection means comprises a capacitive detector (101) comprising at least three electrodes (EM, ER, EOFF, EON, EA), each comprising a conductive armature (104) isolated by at least one dielectric isolation element (105), connected to a means for processing (102):
- a ground electrode (EM);
- a first level detection electrode (EOFF); and
- a second level detection electrode (EON),
wherein said processing means (102) comprises a means for measuring a first capacitance (C2) between said ground electrode (EM) and said first level detection electrode (EOFF) and a second capacitance (C3) between said ground electrode (EM) and said second level detection electrode (EON),
device **characterized in that** the lengths of said first level detection electrode (EOFF) and second level detection electrode (EON) are defined so as to come into contact with said condensates, when the latter respectively reach said first level and said second level in said container (20),
**in that** it comprises an alarm level detection electrode (EA), with a length shorter than said second level detection electrode (EON), said measurement means also provides a third capacitance (C4), measured between said ground electrode (EM) and said alarm level detection electrode (EA),
and **in that** said ground electrode (EM) said first level detection electrode (EOFF) and second level detection electrode (EON) are produced on distinct supports not having a submergible physical continuity between them, said distinct supports being produced in an extension of said printed circuit support (106) and extending beyond said alarm level, so that an upper portion of each of said electrodes is never in contact with said condensates.

2. Control device according to claim 1, wherein the capacity detector comprises a reference electrode (ER), and wherein said measurement means is arranged so as to also provide a reference capacitance (C1), measured between said ground electrode (EM) and said reference electrode (ER).

3. Control device according to claim 2, wherein said processing means (102) determines reduced capacitances, for each of said detection electrodes, corresponding to a ratio between the capacitance (C2, C3) measured between said ground electrode (EM) and, on the one hand, said detection electrode (EOFF, EON), and, on the second hand, said reference capacitance (C1).

4. Control device according to anyone of claims 1 to 3, wherein said electrodes (EM, ER, EOFF, EON, EA) are intended for extending perpendicularly to the free surface of said condensates, over at least a portion of the length thereof.

5. Control device according to anyone of claims 1 to 4, wherein at least a portion of said armatures is coated with and/or housed in a material with a dielectric constant having a value above 4.

6. Control device according to claim 5, wherein said material is ceramic.

7. Control device according to anyone of claims 1 to 6, wherein the control device comprises a galvanic isolation means.

8. Control device according to anyone of claims 1 to 7, wherein at least a portion of said electrodes (EM, ER, EOFF, EON, EA) is made of a conductive resin.

9. An air conditioning, cooling and/or heating system comprising at least one pump for lifting condensates (9) contained in a container (20), and a device for controlling said pump according to anyone of claims 1 to 8, comprising a means for detecting at least two condensate levels in said container (20), processing means (102) and a means for activating and for stopping said pump (9) according to said levels, and a printed circuit support (106) carrying at least a portion of said processing means (102),
said detection means comprises a capacitive detector (101) comprising at least three electrodes (EM, ER, EOFF, EON, EA), each comprising a conductive armature (104) isolated by at least one dielectric isolation element (105), connected to a means for processing (102):
- a ground electrode (EM);
- a first level detection electrode (EOFF); and
- a second level detection electrode (EON),
said processing means (102) comprises a means for measuring a first capacitance (C2), between said ground electrode (EM) and said first level detection electrode (EOFF), and a second capacitance (C3), between said ground electrode (EM) and said second level detection electrode (EON),
system **characterized in that** the lengths of said first level detection electrode (EOFF) and second level detection electrode (EON) are defined so as to come into contact with said condensates, when the condensates respectively reach said first level and said second level in said container (20),
**in that** it comprises an alarm level detection electrode (EA), with a length shorter than said second level detection electrode (EON), said measurement means also provides a third capacitance (C4), measured between said ground electrode (EM) and said alarm level detection electrode (EA),
and **in that** said ground electrode (EM) said first level detection electrode (EOFF) and second level detection electrode (EON) are produced on distinct supports not having a submergible physical continuity between them, said distinct supports being produced in an extension of said printed circuit support (106) and extending beyond said alarm level, so that an upper portion of each of said electrodes is never in contact with said condensates.
